# EUROPÄISCHE PATENTSCHRIFT

(11) **EP 3 479 069 B1**
(45) Veröffentlichungstag und Bekanntmachung des Hinweises auf die Patenterteilung: **16.09.2020**
(21) Anmeldenummer: 17743248.1
(22) Anmeldetag: 29.06.2017
(51) Int. Cl.: G01D 5/14, G01D 5/347

(54) **SENSOREINRICHTUNG**
SENSOR DEVICE
DISPOSITIF DE DÉTECTION

(30) Priorität: 01.07.2016 DE 102016112062
(43) Veröffentlichungstag der Anmeldung: 08.05.2019
(73) Patentinhaber: Physik Instrumente (PI) GmbH & Co. KG, 76228 Karlsruhe (DE)
(72) Erfinder: GRABOWSKI, Axel, 71277 Rutesheim (DE); WALENDA, Carolin, 76187 Karlsruhe (DE)
(74) Vertreter: Kruspig, Volkmar
(86) Internationale Anmeldenummer: PCT/DE2017/100543
(87) Internationale Veröffentlichungsnummer: WO 2018/001416

(56) Entgegenhaltungen:
- DE-A1- 2 811 807
- DE-A1- 10 050 392
- DE-A1-102008 022 027
- FR-A1- 2 851 650
- US-A1- 2004 022 888

## Beschreibung

Die Erfindung betrifft eine Sensoreinrichtung zur Erfassung von Messdaten bezüglich der absoluten Position eines linear oder rotatorisch beweglichen Körpers gemäß Anspruch 1. Zudem betrifft die Erfindung ein Verfahren zur Messung der Position eines linear oder rotatorisch beweglichen Körpers unter Zuhilfenahme einer solchen Sensoreinrichtung gemäß Anspruch 14.

Auf dem Gebiet der Encodertechnologie kann unterschieden werden zwischen Positionsmesssystemen, die inkrementell arbeiten und Positionsmesssystemen, die absolut arbeiten. Bei den inkrementellen Systemen kann der Nutzer keine absolute Positionsinformation auslesen. Daher muss nach einem Neustart des Systems zunächst eine Referenzposition gefunden werden, um das inkrementelle Messsystem zu nullen bzw. zu referenzieren und dadurch eine Startposition zu erhalten (sog. Referenzfahrt). Hierzu sind auf dem Maßstab Referenzmarken und in dem Sensorkopf entsprechende Sensorelemente, welche die Referenzmarken auslesen, erforderlich.

Bei den absoluten Messsystemen wird durch die Abtastung eines Maßstabs eine Positionsinformation generiert, die jederzeit absolut ist, weshalb auch nach einem Neustart des Systems sofort die absolute Positionsinformation zur Verfügung steht und keine Referenzfahrt notwendig ist, was einen deutlichen Vorteil gegenüber inkrementellen Messsystemen darstellt.

Auf dem Gebiet der magnetischen absoluten Encodertechnologie sind verschiedene Verfahren bekannt, solche absoluten Positionsinformationen zu generieren, beispielsweise unter Nutzung des Nonius-Prinzips, bei dem mehrere Spuren ausgelesen werden und aus der Phasendifferenz der verschiedenen Spuren zueinander eine absolute Position berechnet werden kann.

Die magnetischen absolut messenden Systeme besitzen in der Regel einen vergleichsweise einfachen Aufbau und sind daher mit relativ wenig Aufwand kostengünstig herzustellen. Sie sind am Markt als einfache und kompakte integrierte Schaltkreise verfügbar. Ein wesentlicher Vorteil dieser Systeme ist deren Unempfindlichkeit gegenüber Verschmutzung. Dem steht jedoch der Nachteil gegenüber, dass die Auflösung solcher Systeme systembedingt auf eine Größenordnung im Bereich von typischerweise einigen 100nm begrenzt ist.

Auf optischen Prinzipien basierende absolut messende Systeme haben demgegenüber den Vorteil, dass sie höhere Auflösungen erlauben, die im Bereich von deutlich <10nm liegen. Dies ist vor allem durch die kleinere Periode der Maßstäbe im Vergleich zu den magnetischen Systemen möglich. Die optisch messenden absoluten Systeme sind jedoch in der Herstellung aufwändiger und damit kostenintensiver als die magnetisch messenden absoluten Systeme. Auch ist die absolute optische Messung aufwändiger als bei den magnetischen absoluten Sensoren; sie erfolgt beispielsweise über das Auslesen eines Pseudo Random Codes auf dem entsprechenden Maßstab.

Aus der DE19520299A1 ist eine Sensoreinrichtung bekannt, bei welcher zur Messung der Position eines beweglichen Körpers zwei getrennte Sensorsysteme verwendet werden, die nach unterschiedlichen physikalischen Prinzipien arbeiten. Die Signale dieser beiden Sensorsysteme werden durch ein Verarbeitungssystem ergänzt, das die Daten der beiden Sensorsysteme auswertet und zu einem gemeinsamen Positionswert kombiniert. Konkret beschreibt die DE19520299A1 die Verwendung einer Winkelmesseinrichtung, die mittels eines aus zwei Polen bestehenden Magnets in Kombination mit einem Detektionselement in Form eines Hall-Sensors ein absolutes Signal einer Rotation detektiert. Hierbei liefert das magnetische Detektionselement ein analoges sinusförmiges Signal über den Drehwinkelbereich von 360°. Allerdings ist das Winkelsignal nur über einen Einsatzbereich von 120° eindeutig und es ist zudem eine Linearisierung des Winkelsignals notwendig.

Das magnetische Detektionselement wird mit einem inkrementellen optischen Sensorsystem, bestehend aus einem inkrementellen Maßstab mit einer oder mehreren Referenzmarken entlang der Messstrecke, kombiniert. Die Referenzmarke bzw. die Referenzmarken ist bzw. sind für die grundsätzliche Funktion des Systems notwendig.

In der DE19520299A1 ist lediglich kurz angemerkt, aber nicht im Detail beschrieben und auch nicht durch ein Ausführungsbeispiel belegt, dass der grundsätzliche Aufbau der Kombination aus unterschiedlichen Sensorsystemen auch für linear messende Systeme anwendbar ist. Mit der dort beschriebenen Sensoreinrichtung ist es hingegen nicht möglich, eine eindeutige (absolute) Messung über einen Winkelbereich von 360° (sog. singleturn) zu realisieren. Zudem ist es mit der dort beschriebenen Sensoreinrichtung generell nicht möglich, über längere Messstrecken ein nutzbares absolutes Positionssignal zu generieren.

Ein weiterer Nachteil der Sensoreinrichtung gemäß der DE 195 20 299 A1 ist, dass diese einen relativ großen Bauraum bzw. eine relativ große Bauhöhe benötigt und somit nicht geeignet ist für Anwendungen, wo nur ein geringes Einbaumaß für die Sensoreinrichtung vorhanden ist.

Aus der JP2009036637A ist ein Messsystem bekannt, das aus einem kombinierten Maßstab besteht, der sowohl eine magnetische, als auch eine optische Kodierung aufweist. In diesem System ist die optische Kodierung als Beugungsgitter ausgeführt. Nach allgemeinem technischem Verständnis bedeutet dies, dass die Struktur des Beugungsgitters eine Periodizität von kleiner 10µm aufweist. In der entsprechenden Ausführung wird demgemäß von einer Periodizität von 4µm gesprochen. Die JP2009036637A beschreibt weiterhin eine Ausführung, bei der der Code der magnetischen Spur ein absoluter Code ist. Es wird dann eine absolute Position auf Basis der Daten der magnetischen und der optischen Struktur berechnet.

Damit dieses Verfahren funktioniert, ist es notwendig, die absoluten Positionsinformationen der magnetischen Spur und die Daten der optischen Spur so miteinander zu verrechnen, dass das Signal der magnetischen Spur immer eindeutig der zugehörigen Periode des optischen Beugungsgitters zugeordnet werden kann. In der JP2009036637A wird diesbezüglich davon ausgegangen, dass die Beugungsgitter eine perfekte Periodizität besitzen. Hinsichtlich der Periodizität der magnetischen Spur gibt die JP2009036637A einen expliziten Wert von 1000µm an, so dass die Periodizität der magnetischen Spur wesentlich größer ist als die Periodizität der optischen Spur.

Allerdings können magnetische Maßstäbe - bedingt durch ihren Herstellungsprozess - nach allgemeinem technischem Verständnis nur mit Genauigkeiten im Bereich von ca. ±10µm hergestellt werden, wobei die JP2009036637A hinsichtlich eines expliziten Wertes schweigt. Gerade jedoch diese verhältnismäßig hohe Ungenauigkeit des magnetischen Maßstabs verhindert, dass die magnetische und die optische Skale in einem jederzeit gleichbleibenden bestimmten periodischen Abhängigkeitsverhältnis zueinander stehen können, was für die Bestimmung eines absoluten Positionswerts unumgänglich ist. Damit ist es nicht mehr möglich, durch die Kombination der Daten der beiden Maßstäbe ein absolutes Sensorsystem mit eindeutiger Positionsinformation herzustellen. In der JP2009036637A wird nicht darauf eingegangen, wie die Positionsinformationen der beiden Sensorsysteme zueinander synchronisiert werden können.

Aus der GB2230666A ist ein Verfahren bekannt, bei dem ein optischer Maßstab mit mehreren Spuren unterschiedlicher Periodizität verwendet wird. Durch die unterschiedlichen Phaseninformationen der Spuren in Relation zueinander kann eine absolute Positionsinformation berechnet werden. Zur Berechnung dieser absoluten Positionsinformation ist die Kombination der Informationen aus allen Spuren gleichzeitig notwendig. Ein Nachteil dieses Verfahrens ist die Tatsache, dass die Positionsberechnung auf Basis aller Photodioden gleichzeitigt erfolgt. Damit addieren sich auch die Rauschanteile der Photodioden der einzelnen Spuren auf. Weiterhin addieren sich die Fehler, die bei der Herstellung der abzutastenden Spuren entstehen, im Gesamtsignal auf.

Daher ist es eine Aufgabe der Erfindung, eine Sensoreinrichtung bereitzustellen, welche die vorgenannten Probleme bekannter Sensoreinrichtungen überwindet. Insbesondere ist es eine Aufgabe der Erfindung, eine kompakte Sensoreinrichtung bereitzustellen, welche jederzeit eine eindeutige, absolute und hochgenaue Positionsinformation über eine beliebig lange lineare Messstrecke bzw. - im Falle der Messung eines Drehwinkels - über den gesamten Winkelbereich von 360° liefern kann, und welche kompakt und mit einem geringen Bauraum realisierbar ist.

Diese Aufgabe wird gelöst mit einer Sensoreinrichtung nach Anspruch 1. Die sich daran anschließenden Unteransprüche stellen mindestens zweckmäßige Weiterbildungen dar.

Demnach wird ausgegangen von einer Sensoreinrichtung, welche in der Lage ist, die Position eines linear oder rotatorisch beweglichen Körpers absolut zu messen. Hierzu weist die Sensoreinrichtung ein optisches Sensorsystem mit einer Messeinheit und einem mit der Messeinheit zusammenwirkenden Maßstab auf, wobei das optische Sensorsystem für die Positionsmessung in Reflektion arbeitet und ausschließlich Reflektionen nullter Ordnung nutzt, und das optische Sensorsystem ein erstes, von der zu ermittelnden Position des bewegbaren Körpers abhängiges Sensorausgangssignal erzeugt.

Weiterhin umfasst die Sensoreinrichtung ein magnetisches Sensorsystem mit einer Messeinheit und mit einem mit der Messeinheit zusammenwirkenden Maßstab, welches ein zweites, von der zur ermittelnden Position des bewegbaren Körpers abhängiges Sensorausgangssignal erzeugt. Die Auflösung des magnetischen Sensorsystems ist hierbei geringer als die Auflösung des optischen Sensorsystems.

Der Maßstab des optischen Sensorsystems und der Maßstab des magnetischen Sensorsystems sind in einem gemeinsamen Maßstabskörper angeordnet, wobei die Messeinheit des optischen Sensorsystems und die Messeinheit des magnetischen Sensorsystems der Oberfläche des Maßstabskörpers zugewandt sind, an welcher der Maßstab des optischen Sensorsystems und/oder der Maßstab des magnetischen Sensorsystems angeordnet sind bzw. ist und welche eine gemeinsame Messoberfläche definiert. Aufgrund der entsprechenden Anordnung der beiden Maßstäbe gelingt ein sehr kompakter und bauraumsparender Aufbau der Sensoreinrichtung. Insbesondere ist somit ein sehr flach bauendes Sensorsystem realisierbar.

Der vorstehend verwendete Begriff ,gemeinsame Messoberfläche' ist nicht zwingend dahingehend zu verstehen, dass die durch die entsprechende Messeinheit zu erfassenden Daten bzw. Informationen ausschließlich in der Ebene der gemeinsamen Messoberfläche vorliegen. Auch ist dieser Begriff nicht dahingehend zu verstehen, dass die beiden Maßstäbe zwangsläufig in der gleichen Ebene, nämlich der entsprechenden Oberfläche des Maßstabskörpers, angeordnet sind. Vielmehr ist die gemeinsame Messoberfläche körperlich betrachtet primär durch den Maßstab des optischen Sensorsystems definiert, da diesbezüglich eine exakte räumliche Abgrenzung möglich ist. In der Regel ist der optische Maßstab an der Oberfläche des Maßstabskörpers angeordnet bzw. fällt mit dieser zusammen. Bezüglich des Maßstabs des magnetischen Sensorsystems ist eine solche räumliche Abgrenzung kaum möglich, da die magnetischen Feldlinien nur mit hohem technischem Aufwand begrenzt werden können. In der Regel ist der Maßstab des magnetischen Sensorsystems nicht in der gleichen Ebene angeordnet wie der Maßstab des optischen Sensorsystems, was aber auch nicht notwendig ist, da die magnetischen Feldlinien weiter reichen als die räumliche Ausdehnung des magnetischen Maßstabs. Jedoch ist denkbar, dass der optische Maßstab und der magnetische Maßstab in der gleichen Ebene angeordnet sind, so dass die den beiden Messeinheiten zugewandte Oberfläche des Maßstabskörpers gleichzeitig die gemeinsame Messoberfläche darstellt.

Die Sensoreinrichtung umfasst zudem eine Recheneinheit, die dazu vorgesehen ist, das erste bzw. optische Sensorausgangssignal und das zweite bzw. magnetische Sensorausgangssignal zu erhalten, um aus den beiden Sensorausgangssignalen eine Positionsinformation zu berechnen, wobei aus dem zweiten bzw. magnetischen Sensorausgangssignal zu jedem Zeitpunkt auf die aktuelle Periode des optischen Sensorsystems geschlossen werden kann, so dass eine eindeutige absolute Positionsinformation auf Basis des ersten und des zweiten Sensorausgangssignals durch die Recheneinheit berechenbar ist. Wesentlich für diese eindeutige Zuordnung des magnetischen Sensorausgangssignals zur aktuellen Periode des optischen Sensorsystems ist eine Genauigkeit des magnetischen Sensorsystems, welche kleiner ist als die Signalperiode des optischen Sensorsystems. Das bedeutet, dass die Maximalabweichung der Positionsinformation des magnetischen Sensorsystems an einer Position kleiner ist als die Signalperiode des optischen Sensorsystems.

Es kann von Vorteil sein, dass der Maßstab des optischen Sensorsystems in der Ebene der Messoberfläche angeordnet ist. Ebenso kann es von Vorteil sein, dass der magnetische Maßstab in einer zu der Messeinheit des optischen Sensorsystems und in einer zu der Messeinheit des magnetischen Sensorsystems abgewandten Richtung beabstandet zu der Messoberfläche angeordnet ist.

Gemäß der vorstehend beschriebenen vorteilhaften Ausführungsform liegt die physikalische Oberfläche des magnetischen Maßstabs nicht in der gleichen Ebene wie die physikalische Oberfläche des Maßstabs des optischen Sensorsystems. Konkret liegt die physikalische Oberfläche des magnetischen Systems unterhalb der physikalischen Oberfläche des Maßstabs des optischen Sensorsystems. Trotzdem ergibt sich durch diesen Aufbau eine einzige bzw. gemeinsame Messoberfläche, die der physikalischen Oberfläche des Maßstabs des optischen Sensorsystems entspricht. Dies ist möglich, weil das magnetische Feld des magnetischen Maßstabs durch die Materie dringt, die sich zwischen der Oberfläche des magnetischen Maßstabs und der gemeinsamen Messoberfläche befindet, und derart an der gemeinsamen Messoberfläche austritt, dass mit einem entsprechenden magnetischen Sensor der Messeinheit das entsprechende Magnetfeld detektierbar ist.

Es kann auch von Vorteil sein, dass die Messsignale des magnetischen Sensorsystems in einem anderen digitalen Datenformat vorliegen als die Messsignale des optischen Sensorsystems. Gegenüber der DE19520299A1 liegen die Daten des magnetischen Sensorsystems nicht als inkrementelle Daten, sondern bereits als absoluter Datenstrom vor, woraus sich folgende Vorteil ableiten: (i) jederzeit absolute Positionsmessung möglich, die durch das zweite (inkrementelle) System verfeinert wird; (ii) auf der gesamten Messstrecke sind absolute Positionsdaten vorhanden, auch wenn das empfindlichere (optische) System ausfällt; (iii) das Datenformat des absoluten Systems ist sicherer (z.B. CRC (Cyclic Redundancy Check), Error Bit).

Zudem kann es von Vorteil sein, dass die geometrische Abmessung des Maßstabs des optischen Sensorsystems in seiner größten Erstreckungsrichtung im Wesentlichen der geometrischen Abmessung des Maßstabs des magnetischen Sensorsystems in dessen größter Erstreckungsrichtung entspricht. Mit anderen Worten ist der Maßstab des ersten Sensorsystems in etwa genauso lang wie der Maßstab des zweiten Sensorsystems.

Ferner kann es von Vorteil sein, dass das optische Sensorsystem ein inkrementelles Sensorsystem ist und das magnetische Sensorsystem ein absolut messendes Sensorsystem ist.

Außerdem kann es von Vorteil sein, dass die Auflösung der Sensoreinrichtung identisch zu der höheren Auflösung des optischen Sensorsystems ist. Somit ist die Auflösung der Sensoreinrichtung nicht durch die geringere Auflösung des magnetischen Sensorsystems begrenzt.

Es kann sich als günstig erweisen, dass der Maßstab des optischen Sensorsystems eine Gitterstruktur mit zwischen 3 und 20 Linien pro mm aufweist, was einer Periode zwischen 330µm und 50µm entspricht. Hierbei kann es vorteilhaft sein, wenn die Gitterstruktur mittels Ätzen oder durch einen Laser hergestellt ist.

Ebenso kann es sich als günstig erweisen, dass der thermische Ausdehnungskoeffizient des Materials für den Maßstab des optischen Sensorsystems im Wesentlichen dem thermischen Ausdehnungskoeffizienten des Materials für den Maßstab des magnetischen Sensorsystems entspricht. Der vorstehend verwendete Begriff ,im Wesentlichen' beschreibt hierbei eine Abweichung von der absoluten Identität von +/- 10%. Dadurch ist sichergestellt, dass sich die beiden Maßstäbe bei einer Temperaturänderung nicht bzw. nur unwesentlich gegeneinander verschieben. Somit ist auch bei einer Temperaturänderung eine genaue und verlässliche Positionsmessung möglich. Damit ist insbesondere sichergestellt, dass durch die Änderung der Temperatur immer noch eine eindeutige Zuordnung der Perioden in Relation zueinander möglich ist.

Zudem kann es sich als günstig erweisen, dass die Gesamtauflösung der Sensoreinrichtung bei einer linearen Positionsmessung besser als 100nm und bei einer rotatorischen Positionsmessung besser als 100µrad ist.

Ferner kann es sich als günstig erweisen, dass die Messeinheit des ersten Sensorsystems und/oder die Messeinheit des zweiten Sensorsystems als integrierter Schaltkreis ausgeführt sind bzw. ist. Dies erlaubt es, die Sensoreinrichtung noch kompakter und platzsparender aufzubauen.

Die Erfindung betrifft außerdem ein Verfahren zur Erkennung der Position eines linear oder rotatorisch beweglichen Körpers unter Verwendung einer zuvor beschriebenen Sensoreinrichtung. Das erfindungsgemäße Verfahren ist insbesondere dadurch gekennzeichnet, dass die Signale der beiden Sensorsysteme in der Recheneinheit miteinander verglichen werden, um eine erhöhte Redundanz zu erzielen und bei einem Fehlerfall eine Warnung zu generieren. Hierbei ist besonders vorteilhaft, wenn die Gesamtauflösung der Sensoreinrichtung der Auflösung des höher auflösenden Sensorsystems entspricht.

In einer bevorzugten Ausführungsform der Erfindung wird ein magnetisch codierter Maßstab verwendet, über welchen - unter Verwendung von mehreren Magnetfeldsensoren und in Kombination mit einem inkrementellen optischen Sensorsystem - an jeder Position entlang des Maßstabs über eine beliebig lange Messstrecke oder Winkel eine absolute Positionsinformation generiert werden kann. Durch die jederzeit sofort zur Verfügung stehende absolute Positionsinformation entlang der inkrementellen Spur wird keine Referenzmarke benötigt. Die Nutzung einer Referenzmarke wäre optional möglich, um eine zusätzliche Redundanz im System zu erreichen (beispielsweise beim Ausfall des absoluten Systems), ist jedoch für die Grundfunktion der Sensoreinrichtung nicht nötig.

Durch Verwendung eines Maßstabskörpers, in welchen der Maßstab des optischen Sensorsystems und gleichzeitig der Maßstab des magnetischen Sensorsystems integriert sind, wird erreicht, dass die Positionsinformationen für beide Sensorsysteme an einem Ort vereint sind, wodurch nicht nur Bauraum eingespart wird, sondern durch die spezielle Anordnung Umgebungseffekte, beispielsweise aufgrund thermischer Ausdehnung, weitestgehend eliminiert werden. Es ist hierbei auch denkbar, dass der optische Maßstab integral oder einstückig mit dem magnetischen Maßstab ausgeführt ist, wobei die entsprechende Gitterstruktur des optischen Maßstabs in das Material des magnetischen Maßstabs eingearbeitet ist.

Die Sensoreinrichtung der vorliegenden Erfindung ist sowohl in einem reflektierenden, als auch einem transmittieren Verfahren einsetzbar. Das reflektierende Verfahren ermöglicht jedoch einen deutlich kompakteren Bauraum.

Bevorzugt liegen die Positionssignale des absoluten bzw. magnetischen Sensorsystems in einem anderen digitalen Datenformat vor als die Positionssignale des inkrementellen bzw. optischen Sensorsystems, wobei deren Kombination in der Recheneinheit zum Erhalt eines gemeinsamen hochauflösenden absoluten Positionssignals einen speziellen Algorithmus erfordert.

Wie oben ausgeführt, umfasst die Sensoreinrichtung in bevorzugter Weise ein inkrementelles optisches Sensorsystem und ein absolut messendes magnetisches Sensorsystem. Das magnetische Sensorsystem misst die Positionsdaten, beispielsweise mittels des Nonius-Prinzips, bei dem mehrere magnetische Spuren mit unterschiedlichen Perioden abgetastet werden und aus der Phasendifferenz zwischen den magnetischen Spuren eine absolute Position errechnet wird. Andere absolute Messprinzipien sind ebenso denkbar. Das magnetische Sensorsystem misst die absoluten Positionswerte hierbei mit beschränkter Auflösung. Diese Begrenzung ist bedingt durch den Umstand, dass die magnetischen Sensoren der entsprechenden Messeinheit, die den magnetischen Maßstab abtasten, typischerweise in einem Abstand über dem Maßstab positioniert werden, der die Hälfte der Polbreite beträgt. Da der Abstand der magnetischen Sensoren in Relation zum Maßstab typischerweise nicht unter 500µm gewählt wird, haben typische minimale Polbreiten die Größenordnung von 1mm, was dazu führt, dass die typische Rauschbegrenzung in der Größenordnung von 100nm liegt.

Der optische inkrementelle Sensor der Messeinheit des optischen Sensorsystems hat eine höhere Auflösung, da bei optischen Sensoren kleinere Maßstabsperioden gewählt werden können.

Die magnetischen Sensoren und der optische Sensor können beispielsweise auf einem gemeinsamen Träger angeordnet sein, der die optimalen Arbeitsabstände der Sensoren in Relation zum abzutastenden Maßstab realisiert.

Die erfindungsgemäße Sensoreinrichtung kann sowohl für die Messung eines absoluten Positionswertes in einer linearen Anwendung, als auch für die Messung eines absoluten Positionswertes in einer rotatorischen Anwendung verwendet werden. Im Falle einer rotatorischen Anwendung ist eine absolute Messung über eine volle Umdrehung von 360° möglich (sogenannte Singleturn-Messung).

Die Kombination des magnetischen absoluten Sensors und des optischen inkrementellen Sensors ermöglicht die Kombination der Vorteile beider Sensorprinzipien, nämlich den relativ einfachen Aufbau des magnetischen Sensors, der zwar in der Auflösung begrenzt ist, aber absolute Positionswerte liefert, zusammen mit der hohen Auflösung eines optischen Sensors, der jedoch keine absoluten Positionsinformationen liefert.

Zum Verarbeiten der Daten in der Recheneinheit ist es vorteilhaft, wenn die Positionsinformationen der beiden Sensorsysteme in digitaler Form vorliegen. Im einfachsten Fall liegen die Informationen des absolut messenden Sensorsystems bereits ohne entsprechende Aufbereitung als digitale Positionsinformation vor. Ist dies nicht der Fall, werden in einem geeigneten Schaltkreis aus den Ausgangssignalen des Sensorsystems absolute digitale Positionsinformationen erzeugt. Diese Positionsinformationen können dann auf Anforderung einer übergeordneten Instanz abgerufen werden.

Der optische inkrementelle Sensor liefert typischerweise analoge Ausgangssignale. Diese analogen Ausgangssignale werden zunächst in einem Interpolationsschaltkreis aufbereitet und in einen digitalen Datenstrom gewandelt, der auch von einer übergeordneten Instanz ausgelesen werden kann.

Zur Berechnung der Positionsinformationen sind zumindest die beiden folgend beschriebenen Modi bzw. Verfahren möglich:

In einem ersten Modus bzw. Verfahren berechnet die Sensoreinrichtung kontinuierlich Positionsinformationen mit ihrem eigenen Takt. Die Berechnung der Positionsinformationen beinhaltet das synchrone Einlesen der Daten beider Sensorsysteme und die Verrechnung dieser beiden Datenströme zu einem neuen absoluten Datenstrom. Diese neu erzeugten, höher aufgelösten Positionsinformationen werden für eine nachfolgende, die Positionsinformationen auslesende Einheit bereitgehalten. Damit die neuen Positionsinformationen jederzeit von dieser nachfolgenden Einheit abgerufen werden können, ist das Berechnungsverfahren der neuen Positionsinformationen der beiden neuen Datenströme asynchron zur Abfrage der nachfolgenden Einheit.

In einem zweiten Modus bzw. Verfahren werden die Positionsinformationen erst berechnet, wenn eine Anforderung von der die Positionsinformationen auslesenden Einheit kommt. Der Ablauf ist dann folgendermaßen:
- die auslesende Einheit schickt eine Anforderung.
- die Recheneinheit fordert von den beiden Sensorsystemen synchron die Positionsinformationen an.
- die Recheneinheit berechnet aus beiden Positionsinformationen eine neue Positionsinformation.
- die neue Positionsinformation wird an die auslesende Einheit zurückgesendet.

Der zeitliche Verzug bis zur Bereitstellung der Positionsinformation kann hierbei über digitale Sensorprotokolle wie z.B. das BiSS-Protokoll abgefangen werden.

Die Recheneinheit, welche die Datenströme der beiden Sensorsysteme vereint, kann u.a. als CPU (Central Processing Unit), MCU (Micro Controller Unit), FPGA (Field Programmable Gate Array) oder ASIC (Application-Specific Integrated Circuit) realisiert sein.

Wie weiter oben bereits ausgeführt wurde, sind der magnetische Maßstab für den magnetischen Sensor und der optische Maßstab für den optischen Sensor in einem gemeinsamen Maßstabskörper integriert. Vorzugsweise ist der magnetische Maßstab in dem Maßstabskörper verborgen angeordnet, und beispielsweise bezüglich einer den Messeinheiten der Sensorsysteme abgewandten Richtung hinter dem optischen Maßstab angeordnet. Auf der Oberseite des Maßstabskörpers bzw. eines solchen hybriden oder integralen Maßstabs ist eine Struktur, vorzugsweise eine Gitterstruktur, aufgebracht, die von dem Sensor des optischen Sensorsystems detektiert werden kann und welche die vorzugsweise inkrementellen Positionsinformationen für das optische Sensorsystem beinhaltet. Die Struktur ist dabei bevorzugt in ein Material eingebracht, das denselben thermischen Ausdehnungskoeffizienten hat wie die Trägerstruktur, in welcher sich das magnetische Material für den magnetischen Maßstab befindet.

Die erfindungsgemäße Sensoreinheit kann so betrieben werden, dass die Signale der beiden Sensorsysteme gleichzeitig, einzeln sowie in Kombination abgerufen werden können. Ein möglicher Anwendungsfall wäre ein redundanter Betrieb der beiden Sensorsysteme, so dass bei Bedarf auf die Positionsinformationen eines der Systeme zurückgegriffen werden kann, wenn das entsprechende andere Sensorsystem ausfällt oder abgeschaltet ist. Das magnetische absolut messende Sensorsystem ist relativ robust und unempfindlich gegen Verschmutzungen, wodurch die Verlässlichkeit seiner Positionsinformationen im Vergleich zum optischen Sensorsystem relativ hoch ist. Durch Kombinieren der Daten aus beiden Sensorsystemen kann eine Redundanz erzeugt werden, innerhalb derer sich beide Systeme gegenseitig überwachen.

Im Unterschied zur Lehre der GB2230666A wird für die Positionsbestimmung mit der erfindungsgemäßen Sensoreinheit nicht die Informationen von allen Spuren gleichzeitig benötigt, sondern das weniger hochauflösende und weniger genaue Messsystem wird nur verwendet, um die Periode des höherauflösenden Messsystems zu jedem Zeitpunkt eindeutig zu bestimmen; es wird also nur verwendet, um die absoluten Sensorinformationen eindeutig auf die optische Periode zurückrechnen zu können. Daher sind bei der erfindungsgemäßen Sensoreinheit die Anforderungen an die Relation der Spuren der Systeme zueinander geringer als bei der in der GB2230666A beschriebenen Sensoreinheit. Entsprechend ist für das Gesamtsystem die Genauigkeit und die Auflösung bestimmt durch das höherauflösende System und unabhängig von dem weniger hochauflösenden System. Die einzige Einschränkung ist die Tatsache, dass eine eindeutige Zuordnung der Periode möglich sein muss.

Im Gegensatz zu der EP2020591A2 ist bei der vorliegenden Erfindung sichergestellt, dass die Information der beiden Informationsträger zueinander in Relation gesetzt werden können. Durch ein einfaches Aneinanderhängen der Positionsinformationen der beiden Sensorsysteme (magnetisch absolut und optisch inkrementell) wird es ohne Synchronisation der Positionsdaten in Relation zueinander Sprünge und Abweichungen im kombinierten Signal geben.

Um dies zu unterbinden, müssen die Daten aufeinander synchronisierbar sein, bzw. es muss durch die Relation der Spuren zueinander sichergestellt sein, dass die eindeutige Zuordnung der Periodizitäten der Spuren zueinander möglich ist. Als Zahlenbeispiel sei für einen magnetischen absoluten Maßstab von einem Pol-zu-Pol Abstand von 1.6mm und entsprechend einer Periodizität des Signals von 3.2mm ausgegangen. Auf dem entsprechenden Maßstab mit 3.2mm Signalperiode sei eine optische Skala aufgebracht. Bei dem Sensorsystem mit dem optischen Maßstab wird das 6-Sigma-Rauschen (bei hoher Bandbreite des Systems) in der Größenordnung um 5µm liegen. Die Genauigkeit des magnetischen Maßstabs wird in der Größenordnung von 10µm/m liegen. Der Anteil der Nicht-Linearität des optischen Maßstabes wird ebenfalls in der Größenordnung um 5µm liegen. Durch ein optimales thermisches Design unter Verwendung geeigneter Materialien kann das System so aufgebaut werden, dass die Unterschiede in der thermischen Ausdehnung der beiden Spuren in Relation zueinander gering sind. In der Gesamtsumme wird die Genauigkeit des magnetischen Systems also in der Größenordnung um 20µm liegen. Damit durch die Positionsinformationen, die aus dem magnetischen System gewonnen werden, eine eindeutige Zuordnung zu dem optischen System möglich ist, darf demnach die Periode des optischen Sensorsystem nicht kleiner als 2 x 20µm = 40µm gewählt werden, um die eindeutige Zuordnung über den gesamten Betriebsparameterbereich zu gewährleisten.

Weiterhin ist es möglich, die Positionsinformationen der beiden Sensorsysteme gleichzeitig einzeln auszulesen. Diese Verwendungsweise hat den Vorteil, dass - falls aus dem optischen Sensorsystem beispielsweise wegen Verschmutzung keine Daten mehr geliefert werden - trotzdem die Positionsdaten des absoluten magnetischen Sensorsystems, allerdings mit geringerer Auflösung, verwendet werden können. Sollten die Daten des optischen Sensorsystems zu einem späteren Zeitpunkt wieder zur Verfügung stehen, wäre die absolute Positionsmessung zusammen mit der hohen Auflösung des optischen Sensorsystems wieder verfügbar. Ein ähnlicher Anwendungsfall wäre das Abschalten und bedarfsgerechte spätere Zuschalten des optischen Sensorsystems zur Energieeinsparung.

Zudem ist es möglich, die Signale der beiden Sensorsysteme gleichzeitig in Kombination und als Einzelsignal zu nutzen für den Fall, dass positionsabhängige Trigger-Signale zur Synchronisation notwendig oder hilfreich sind. In einem solchen Anwendungsfall würden sowohl die hochaufgelösten absoluten Positionssignale verwendet, die sich aus der Verrechnung der Daten der beiden Sensorteile ergeben, sowie das Signal des inkrementellen Sensors, das unabhängig und synchron sowohl in analoger (sin/cos) sowie digitaler (A/B) Form vorliegt.

Es folgt die Beschreibung unterschiedlicher Ausführungsformen der erfindungsgemäßen Sensoreinrichtung bzw. von Teilen der erfindungsgemäßen Sensoreinrichtung mit Hinblick auf die entsprechenden Figuren, wobei sich gleiche Bezugszeichen auf gleiche Teile der unterschiedlichen Figuren beziehen.

Es zeigen:
Figur 1: Schematische Darstellung des Datenflusses innerhalb einer erfindungsgemäßen Sensoreinrichtung
Figur 2: Ausführungsform der Anordnung der Maßstäbe einer erfindungsgemäßen Sensoreinrichtung
Figur 3: Schematische Darstellung einer Ausführungsform der erfindungsgemäßen Sensoreinrichtung
Figur 4: Schematische Darstellung bezüglich der Synchronisation der Positionsdatenströme der beiden Sensorsysteme
Figur 5: Abschnitte (a) und (b): unterschiedliche Ausführungsformen hinsichtlich der Anordnung der Messeinheiten der Sensorsysteme gegenüber dem zugeordneten Maßstab einer erfindungsgemäßen Sensoreinheit

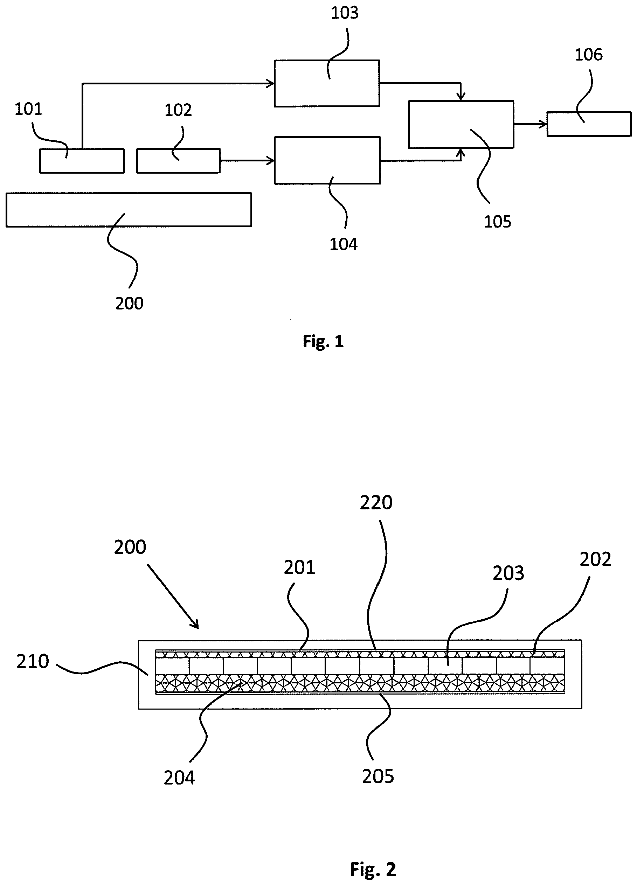

Figur 1 zeigt eine schematische Abbildung des Datenflusses innerhalb einer erfindungsgemäßen Sensoreinrichtung. Die Messeinheit 101 eines magnetischen und absolut messenden Sensorsystems und die Messeinheit 102 eines optischen und inkrementell messenden Sensorsystems tasten den Maßstab 200 ab, welcher einen optisch abtastbaren Maßstab und einen magnetisch abtastbaren Maßstab umfasst und somit einen Hybrid-Maßstab darstellt. Die Messeinheit 101 tastet dabei in die magnetische Struktur des Hybrid-Maßstabs 200 ab. In einer Verarbeitungseinheit 103 wird dabei aus den gewonnenen Informationen eine absolute Position ermittelt. Die Positionsinformationen werden dabei als digitale Informationen über ein digitales Interface bereitgestellt. Die Messeinheiten 101 und 102 können auch in einem einzigen integrierten Schaltkreis zusammengefasst sein. Die Messeinheit 102 tastet die Oberfläche bzw. den optischen Maßstab des Hybrid-Maßstabes 200 optisch in Reflexion ab. Die entsprechenden Positionsinformationen werden in einem geeigneten Schaltkreis 104, z.B. einem Interpolationsschaltkreis, in digitale Positionsinformationen gewandelt und über ein digitales Interface bereitgestellt. Die digitalen Positionssignale bzw. Positionsinformationen werden dann einer Recheneinheit 105 zur weiteren Datenverarbeitung zur Verfügung gestellt. Die Recheneinheit 105 kann dabei ein Microcontroller, ein FPGA (Field Programmable Gate Array), ein ASIC (Application-Specific Integrated Circuit) o.ä. sein, der durch Kombination der Positionsinformationen der beiden Sensorsysteme einen neuen absoluten Positionswert berechnet und als Datenstrom 106, der einem digitalen Protokoll für Positionsinformationen (z.B. SSI, BiSS, o.ä.) folgen kann, für einen in Fig. 1 nicht gezeigten Controller bereitstellt. Die Messeinheiten 101 und 102, die Verarbeitungseinheit 103, der Schaltkreis 104 und die Recheneinheit 105 können in beliebiger Kombination in integrierten Schaltkreisen verbaut sein.

Figur 2 zeigt eine schematische Darstellung für eine mögliche Ausführungsform bezüglich der Anordnung der Maßstäbe der erfindungsgemäßen Sensoreinrichtung in Form eines kombinierten oder Hybrid-Maßstabs 200 für die magnetische und die optische Messeinheit des jeweiligen Sensorsystems. Der Hybrid-Maßstab 200 umfasst einen gemeinsamen Maßstabskörper 210, in welchem ein magnetischer Maßstab 203 zwischen einer Materialschicht 202 und einer Trägerschicht 204 angeordnet ist. Sowohl die Trägerschicht 204, als auch die Materialschicht 202 bestehen aus einem nichtmagnetischen Edelstahl. Nach außen grenzt an die Materialschicht 202 eine Oberflächenschicht 201 an, in welcher der optische Maßstab 220 in Form einer Gitterstruktur integriert bzw. eingearbeitet ist.

Der magnetische Maßstab 203 kann durch Anlegen eines äußeren Magnetfeldes so magnetisiert werden, dass die magnetische Struktur in kontinuierlicher und abwechselnder Abfolge zahlreiche Nord- und Südpole beinhaltet, die von der Messeinheit des magnetischen Sensorsystems ausgewertet werden kann. Das Magnetfeld des magnetischen Maßstabs ist ausreichend groß, um die über ihm liegende Materialschicht 202 und auch die Oberflächenschicht 201 bzw. den optischen Maßstab 220 zu durchdringen und weit darüber hinaus zu ragen, um von der der Oberflächenschicht 201 zugewandten, aber davon beabstandeten Messeinheit des magnetischen Sensorsystems detektiert werden zu können. Die Magnetisierung ist weiterhin so beschaffen, dass durch die Detektion mit dem Sensor des magnetischen Sensorsystems die Berechnung einer absoluten Position möglich ist (z.B. über das Nonius-Prinzip mit mehreren nebeneinander auf dem Maßstab angeordneten Spuren).

Der thermische Ausdehnungskoeffizient der Trägerschicht 204 entspricht im Wesentlichen dem thermischen Ausdehnungskoeffizienten des magnetischen Maßstabs 203. Die Materialschicht 202 hat einen zum Material der Trägerschicht 204 identischen thermischen Ausdehnungskoeffizienten, und auch der thermische Ausdehnungskoeffizient der Oberflächenschicht 201 entspricht im Wesentlichen dem thermischen Ausdehnungskoeffizienten der Materialschicht 202 bzw. der Trägerschicht 204. Somit dehnt bzw. kontrahiert sich der Hybrid-Maßstab bei Temperaturänderung gleichmäßig und es resultieren keine thermischen Spannungen innerhalb des Hybrid-Maßstabs.

Die Oberflächenschicht 201 besitzt eine definierte Strukturierung, welche den optischen Maßstab 220 definiert, und die Messeinheit des optischen Sensorsystems 102 kann aus dieser Strukturierung inkrementelle Positionsdaten erzeugen. Die Strukturierung kann durch unterschiedliche Methoden erfolgen, beispielsweise durch eine Laserbehandlung der Oberfläche oder durch ein Ätzverfahren.

Aufgrund des thermisch angepassten Ausdehnungsverhaltens der Trägerschicht 204, des magnetischen Maßstabs 203, der Materialschicht 202 und der Oberflächenschicht 201 ist sichergestellt, dass auch bei einer Temperaturänderung, welcher die Sensoreinheit bzw. der Maßstabskörper unterworfen ist,die Relation der Maßstrukturen zueinander stets gleich bleibt.

Es ist denkbar, dass der magnetische Maßstab und der optische Maßstab nebeneinander angebracht werden, so dass deren Oberflächen in einer gemeinsamen bzw. gleichen Ebene liegen.

Auf der Unterseite des Hybrid-Maßstabs ist ein haftfähiges Material 205 (z.B. doppelseitiges Klebeband) angebracht, das es ermöglicht, den Maßstab mit seiner Unterseite an einer Struktur des Maßstabskörpers 210 zu befestigen.

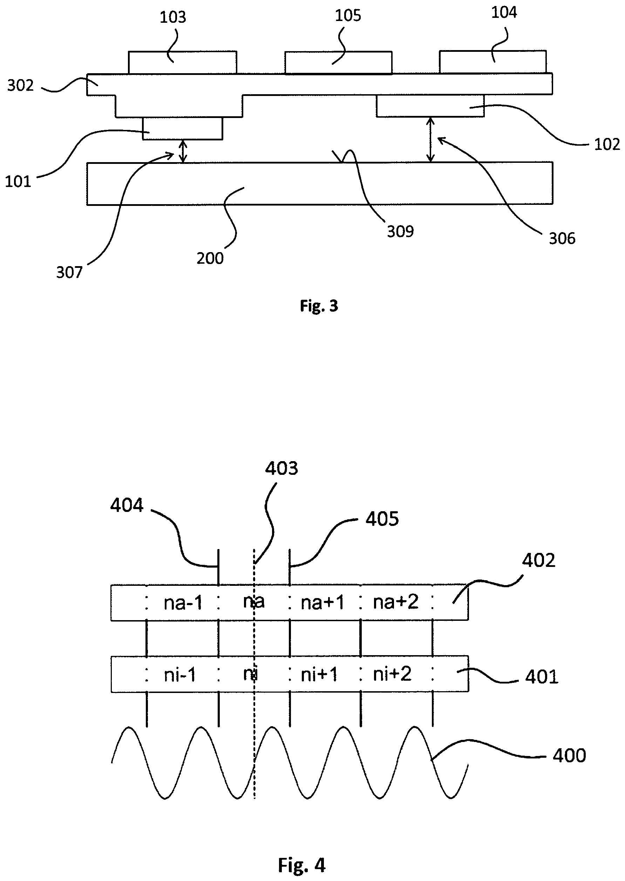

Figur 3 zeigt in schematischer Weise eine Ausführungsform der erfindungsgemäßen Sensoreinrichtung. Sie umfasst den Hybrid-Maßstab 200, enthaltend einen magnetischen Maßstab und einen optischen Maßstab, ein magnetisches Sensorsystem mit einer entsprechenden Messeinheit 101, welche mit dem magnetischen Maßstab des Hybrid-Maßstabs 200 zusammenwirkt, und ein optisches Sensorsystem mit einer entsprechenden Messeinheit 102, welche mit dem optischen Maßstab des Hybrid-Maßstabs zusammenwirkt.

Der Abstand 307 der Messeinheit 101 von der Messoberfläche 309 entspricht in etwa der Hälfte der Periode der Magnetisierung des magnetischen Maßstabs. Für den Abstand 306 der optischen Messeinheit 102 von der gemeinsamen Messoberfläche 309 existiert ebenfalls ein optimaler Bereich. Das Trägerelement 302, an welchem die Messeinheiten 101 und 102 angeordnet sind, ermöglicht hierbei ein Einstellen des optimalen Arbeitsabstands.

Die Daten der optischen Messeinheit 102 bzw. des optischen Sensors werden in einem Schaltkreis 104 in Form eines Interpolationschips in digitale Positionssignale umgewandelt. Analoges gilt für die Signale der magnetischen Messeinheit bzw. des magnetischen Sensors 101, dessen Signale in der Verarbeitungseinheit 103 weiter verarbeitet werden. Es ist denkbar, die magnetische Messeinheit 101 und die zugeordnete Verarbeitungseinheit 103, bzw. die optische Messeinheit 102 und den zugeordneten Interpolationschip 104, in einem gesonderten ASIC zu vereinen. Die Datenströme der beiden Sensoren werden anschließend der Recheneinheit 105, beispielsweise einem DSP (Digital Signal Processor), einer MCU oder einem FPGA zugeführt und weiter verarbeitet.

Eine mögliche Verarbeitung der Datenströme in der Recheneinheit 105 wird im Folgenden beschrieben: der digitale Ausgangsdatenstrom eines magnetischen absoluten Positionssensors basierend auf dem Nonius-Prinzip hat beispielsweise eine Länge von 23 Bit. Von diesem Ausgangsdatenstrom entsprechen dann bei einer Sensorperiode der Basis des Nonius von 3200µm und einer Interpolation der Eingangsdaten des Nonius mit 14 Bit die hinteren 9 Bit einem Weg von 100µm. Ein Bit dieses Datenstroms entspricht 195,31 nm.

Bei dem optischen inkrementellen Sensor mit einer Periode von 100µm und einer Interpolationsrate der Analogsignale von 14 Bit erhält man ein Signal, welches periodisch in 100µm ist. Bei diesem Signal entspricht dann 1 Bit = 6,18nm.

Die Recheneinheit liest nun die Daten der beiden Sensoren bzw. Sensorsysteme aus und generiert aus der Kombination der Daten einen neuen absoluten Datenstrom mit 28 Bit an Positionsdaten, wobei die unteren 14 Bit des inkrementellen Messsystems und die oberen 14 Bit des absoluten Messsystems verwendet und aneinander gehängt werden. Die Perioden des inkrementellen Sensors können mitgezählt werden, und die entsprechenden drei Datenströme (d.h. inkrementeller Sensor mit Periodenzähler, absoluter Sensor und neuer Ausgangsdatenstrom) können miteinander verglichen werden, um eine Redundanz zu erzeugen. An den Übergangspunkten der Perioden zueinander sorgt sowohl im inkrementellen Messsystem als auch im absoluten Messsystem die Recheneinheit über einen entsprechenden Algorithmus für die Konsistenz der Daten.

Für das Verfahren müssen die Rohdaten aus den beiden Sensorsystemen nicht zwangsläufig in einem binären Verhältnis zueinander stehen, jedoch vereinfacht dies beispielsweise die Berechnung der Ausgangsdaten in einem FPGA. Bei Sensordaten, die in einem nicht binären Verhältnis zueinander stehen, kann das Verfahren analog angewendet werden, jedoch ist es dann notwendig, die Verrechnung der Daten zueinander mittels Ganzzahl oder sogar mittels Fließkommazahl zu bewerkstelligen.

Figur 4 verdeutlicht in einer schematischen Darstellung die Synchronisation der Positionsdatenströme der beiden Sensorsysteme. Der magnetische absolute Sensor liefert über seinen Verfahrbereich absolute Positionsdaten 402. Diese Daten sind absolut und können in Positionstücke der Länge des zweiten Messsystems heruntergerechnet werden. Eine Anforderung an diese Positionsdaten ist, dass sie in Relation zu den Positionsdaten 401 des optischen inkrementellen Sensors immer eine eindeutige Zuordnung der Periode erlauben, in der sich der inkrementelle Sensor in Relation zur absoluten Positionsinformation befindet.

Ist die Relation der beiden Positionsinformationen zueinander nicht korrekt, so tritt ein Fehlerfall ein, da unter Umständen keine Zuordnung der absoluten Position des magnetischen Sensors zur relativen Position des inkrementellen Sensors mehr möglich ist. Es kann daher sinnvoll sein, dass bei der ersten Inbetriebnahme der Sensoreinrichtung ein Kalibrationsschritt durchgeführt wird. Dabei wird die Phaseninformation der beiden Messeinheiten bzw. Sensoren gegeneinander abgeglichen. Das inkrementelle Sensorsystem liefert stets Positionsdaten 401, die periodisch in einer Periode 400 des Maßstabssind. An den Überganspunkten der Perioden zueinander springt der Positionswert innerhalb der Periode von seinem Maximalwert innerhalb einer Periode wieder auf den Anfangswert zurück (z.B. von Periode ni zu ni+1). Analog gibt es in den Positionsdaten 402 des absoluten Sensorsystems Punkte, die jeweils anzeigen, in welcher Periode sich das Sensorsystem gerade befindet, bzw. Punkte, die den Übergang in die jeweils nächste Periode anzeigen (z.B. Periode na zu na-1, bzw. na zu na+1). Diese Übergänge sind in Figur 4 mit den Bezugszeichen 404 und 405 versehen.

Sinnvollerweise werden die Perioden so aufeinander abgeglichen, dass die künstlichen Perioden des absoluten Sensorsystems exakt ausgerichtet sind zu den realen Perioden des inkrementellen Sensorsystems (z.B. an der Position 403). Mit anderen Worten liegen die Punkte, an denen jeweils der Übergang von einer Periode in die nächste Periode stattfindet, quasi an derselben Position. Wenn sich die Positionsinformationen der Signale der beiden Maßstäbe nun leicht gegeneinander verschieben, ist mit diesem Abgleich über einen größeren Bereich sichergestellt, dass das absolute Positionssignal immer der richtigen inkrementellen Periode zugeordnet ist.

Bezüglich der Position 403 kann nun ein gewisser Sicherheitsabstand berechnet werden, bei dem der Abgleich der Perioden zueinander zuverlässig funktioniert. Ein sinnvoller Abstand kann dabei beispielsweise die halbe Periode des inkrementellen Messsystems sein. Wenn dieser Wert überschritten wird, kann das Gesamtmesssystem beispielsweise eine Warnung ausgeben, welche signalisiert, dass die Sicherheitsreserve aufgebraucht ist.

Eine Verschiebung der Signale zueinander wird beeinflusst durch eine unterschiedliche Linearität der Positionssignale der beiden Sensorsysteme, die Absolutgenauigkeit des magnetischen Maßstabs in Relation zur optischen Spur und durch thermische Einflüsse. Weiterhin muss auch sichergestellt sein, dass sich die Position der Sensoren zueinander durch thermische Einflüsse nur minimal verschiebt.

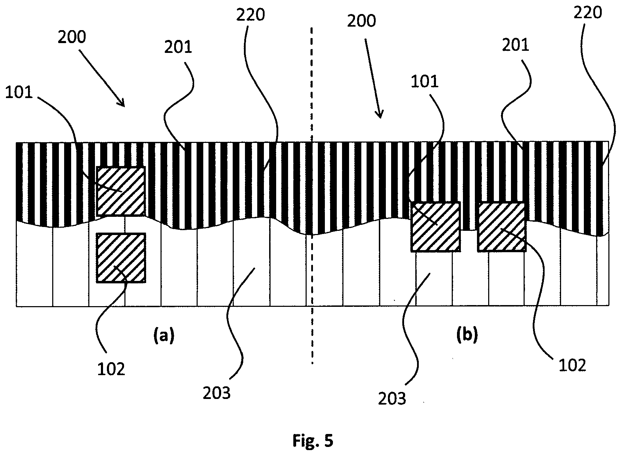

Figur 5 zeigt in den Abschnitten (a) und (b) unterschiedliche Ausführungsformen hinsichtlich der Anordnung der Messeinheiten der Sensorsysteme gegenüber dem Maßstab bzw. den Maßstäben einer erfindungsgemäßen Sensoreinheit. Der Maßstab 200 ist als Hybrid-Maßstab ausgebildet. Seine Oberflächenschicht 201 weist eine definierte Struktur auf, welche reflektierende und absorbiere Bereiche umfasst (dargestellt durch helle und dunkle Streifen) und somit den entsprechenden optischen Maßstab 220 bildet, der von der Messeinheit eines optischen Sensorsystems, d.h. einem optischen Sensor, abgetastet werden kann. Aufgrund des in Figur 5 dargestellten Teilschnitts ist auch der in dem Hybrid-Maßstab 200 eingebettete und in seinem Inneren verborgene magnetische Maßstab 203 zu erkennen, der in kontinuierlicher und abwechselnder Abfolge zahlreiche Nord- und Südpole (dargestellt durch hellere und dunklere Streifen) umfasst und auch mehrere magnetische Spuren mit unterschiedlichen Perioden nebeneinander enthalten kann.

Die beiden Messeinheiten bzw. Sensoren 101 und 102, welche mit dem entsprechenden Maßstab zusammenwirken, können gegenüber dem Hybrid-Maßstab 200 entweder in dessen Längserstreckung nebeneinander (Abschnitt (b) von Figur 5) oder in dessen Quererstreckung nebeneinander (Abschnitt (a) von Figur 5) angeordnet sein.

### Bezugszeichenliste

- 101: Messeinheit des magnetischen Sensorsystems
- 102: Messeinheit des optischen Sensorsystems
- 103: Verarbeitungseinheit
- 104: Schaltkreis
- 105: Recheneinheit
- 106: Datenstrom
- 200: Hybrid-Maßstab
- 201: Oberflächenschicht
- 202: Materialschicht
- 203: Maßstab des magnetischen Sensorsystems
- 204: Trägerschicht
- 205: haftfähiges Material
- 210: Maßstabskörper
- 220: Maßstab des optischen Sensorsystems
- 302: Trägerelement
- 306: Abstand der optischen Messeinheit von der Messoberfläche
- 307: Abstand der magnetischen Messeinheit von der Messoberfläche
- 309: gemeinsame Messoberfläche
- 400: Periodizität der Signale des Maßstabs
- 401: Positionsdaten des optischen Sensorsystems
- 402: Positionsdaten des magnetischen Sensorsystems
- 403: Position mit maximalem Abstand zu den Übergangspunkten der Perioden der Signale der beiden Maßstäbe
- 405: Übergangspunkt der Periode der Signale der beiden Maßstäbe
- 406: Übergangspunkt der Periode der Signale der beiden Maßstäbe

## Patentansprüche

1. Sensoreinrichtung zur Erfassung von Messdaten bezüglich der absoluten Position eines linear oder rotatorisch beweglichen Körpers, umfassend:
- ein optisches Sensorsystem mit einer Messeinheit (102) und einem mit der Messeinheit (102) zusammenwirkenden Maßstab (220), wobei das optische Sensorsystem für die Positionsmessung ausschließlich Reflektionen nullter Ordnung nutzt, und das optische Sensorsystem ein erstes, von der zu ermittelnden Position des bewegbaren Körpers abhängiges Sensorausgangssignal abgibt, und
- ein magnetisches Sensorsystem mit einer Messeinheit (101) und mit einem mit der Messeinheit zusammenwirkenden Maßstab (203), welches ein zweites, von der zur ermittelnden Position des bewegbaren Körpers abhängiges Sensorausgangssignal abgibt, wobei der Maßstab (220) des optischen Sensorsystems und der Maßstab (203) des magnetischen Sensorsystems in einen gemeinsamen Maßstabskörper (210) integriert sind und die Messeinheit (102) des optischen Sensorsystems und die Messeinheit (101) des magnetischen Sensorsystems der Oberfläche des Maßstabskörpers (210) zugewandt sind, an welcher der Maßstab (220) des optischen Sensorsystems und/oder der Maßstab (203) des magnetischen Sensorsystems angeordnet ist und welche eine Messoberfläche definiert, und wobei das optische Sensorsystem eine höhere Auflösung aufweist als das magnetische Sensorsystem, und
- eine Recheneinheit (105), die dazu vorgesehen ist, das erste Sensorausgangssignal (401) und das zweite Sensorausgangssignal (402) zu erhalten und aus dem ersten Sensorausgangssignal (401) und dem zweiten Sensorausgangssignal (402) ein gemeinsames Sensorausgangssignal zu erzeugen, wobei aus dem zweiten Sensorausgangssignal (402) des magnetischen Sensorsystems zu jedem Zeitpunkt auf die aktuelle Periode des optischen Sensorsystems geschlossen werden kann, um eine eindeutige absolute Positionsinformation auf Basis des ersten und des zweiten Sensorausgangssignals zu berechnen,
wobei die Genauigkeit des magnetischen Sensorsystems kleiner ist als die Signalperiode des optischen Sensorsystems.

2. Sensoreinrichtung nach Anspruch 1, **dadurch gekennzeichnet, dass** der Maßstab (220) des optischen Sensorsystems in der Ebene der gemeinsamen Messoberfläche (309) des Maßstabskörpers (210) angeordnet ist.

3. Sensoreinrichtung nach Anspruch 1 oder 2, **dadurch gekennzeichnet, dass** der Maßstab (203) des magnetischen Sensorsystems in einer zu der Messeinheit (102) des optischen Sensorsystems und in einer zu der Messeinheit (101) des magnetischen Sensorsystems abgewandten Richtung beabstandet zu der gemeinsamen Messoberfläche (309) des Maßstabskörpers (210) angeordnet ist.

4. Sensoreinrichtung nach einem der vorhergehenden Ansprüche, **dadurch gekennzeichnet, dass** die Sensorausgangssignale (402) des magnetischen Sensorsystems in einem anderen digitalen Datenformat vorliegen als die Sensorausgangssignale (401) des optischen Sensorsystems.

5. Sensoreinrichtung nach einem der vorhergehenden Ansprüche, **dadurch gekennzeichnet, dass** die geometrische Abmessung des Maßstabs (220) des optischen Sensorsystems in seiner größten Erstreckungsrichtung im Wesentlichen der geometrischen Abmessung des Maßstabs (203) des magnetischen Sensorsystems in dessen größter Erstreckungsrichtung entspricht.

6. Sensoreinrichtung nach einem der vorhergehenden Ansprüche, **dadurch gekennzeichnet, dass** das optische Sensorsystem ein inkrementelles Sensorsystem ist und das magnetische Sensorsystem ein absolut messendes Sensorsystem ist.

7. Sensoreinrichtung nach einem der vorhergehenden Ansprüche, **dadurch gekennzeichnet, dass** die Auflösung der Sensoreinheit identisch zu der Auflösung des optischen Sensorsystems ist.

8. Sensoreinrichtung nach einem der vorhergehenden Ansprüche, **dadurch gekennzeichnet, dass** der Maßstab (220) des optischen Sensorsystems eine Gitterstruktur mit zwischen 3 und 20 Linien pro mm aufweist.

9. Sensoreinrichtung nach Anspruch 8, **dadurch gekennzeichnet, dass** die Gitterstruktur mittels Ätzen oder durch einen Laser hergestellt ist.

10. Sensoreinrichtung nach einem der vorhergehenden Ansprüche, **dadurch gekennzeichnet, dass** der thermische Ausdehnungskoeffizient des Materials für den Maßstab (220) des optischen Sensorsystems im Wesentlichen dem thermischen Ausdehnungskoeffizienten des Materials für den Maßstab (203) des magnetischen Sensorsystems entspricht.

11. Sensoreinrichtung nach einem der vorhergehenden Ansprüche, **dadurch gekennzeichnet, dass** deren Gesamtauflösung bei einer linearen Positionsmessung besser als 100nm ist und bei einer rotatorischen Positionsmessung besser als 100µrad ist.

12. Sensoreinrichtung nach einem der vorhergehenden Ansprüche, **dadurch gekennzeichnet, dass** die Messeinheit (102) des optischen Sensorsystems und/oder die Messeinheit (101) des magnetischen Sensorsystems als integrierter Schaltkreis ausgeführt sind bzw. ist.

13. Sensoreinrichtung nach einem der vorhergehenden Ansprüche, **dadurch gekennzeichnet, dass** die Messdaten der Sensoreinrichtung in einem gesicherten digitalen Datenformat an eine übergeordnete Einheit übertragen werden.

14. Verfahren zur Erfassung der Messdaten bezüglich der absoluten Position eines linear oder rotatorisch beweglichen Körpers unter Verwendung einer gemäß einem der Ansprüche 1 bis 13 definierten Sensoreinrichtung, wobei die Sensorausgangssignale (401, 402) der beiden Sensorsysteme in der Recheneinheit (105) miteinander verglichen werden, um eine erhöhte Redundanz zu erzielen und bei einem Fehlerfall eine Warnung zu generieren.

15. Verfahren nach Anspruch 14, **dadurch gekennzeichnet, dass** die Sensoreinrichtung synchron die Sensorausgangssignale (401, 402) beider Sensorsysteme einliest und daraus höher aufgelöste Positionsmessdaten berechnet, welche für eine nachfolgende, die Positionsmessdaten auslesende Einheit bereitgehalten werden, wobei die Abfrage der höher aufgelösten Positionsmessdaten durch die auslesende Einheit asynchron zu deren Berechnung erfolgt.

16. Verfahren nach Anspruch 15, **dadurch gekennzeichnet, dass** die Positionsmessdaten zunächst von der auslesenden Einheit angefordert werden, und anschließend die Recheneinheit (105) von beiden Sensorsystemen synchron die jeweiligen Positionsmessdaten anfordert und aus beiden Positionsmessdaten eine neue Positionsinformation berechnet, und die neue Positionsinformation danach an die auslesende Einheit zurückgesendet wird.

## Claims

1. A sensor device for detecting measurement data relating to the absolute position of a linearly or rotationally moveable body, comprising:
- an optical sensor system having a measuring unit (102) and a gauge (220) cooperating with the measuring unit (102), wherein the optical sensor system uses exclusively zero-order reflections for the position measuring, and the optical sensor system emits a first sensor output signal depending on the position to be determined of the moveable body, and
- a magnetic sensor system having a measuring unit (101) and a gauge (203) cooperating with the measuring unit, which emits a second sensor output signal depending on the position to be determined of the moveable body, wherein the gauge (220) of the optical sensor system and the gauge (203) of the magnetic sensor system are integrated in a common gauge body (210), and the measuring unit (102) of the optical sensor system and the measuring unit (101) of the magnetic sensor system are facing the surface of the gauge body (210), on which the gauge (220) of the optical sensor system and/or the gauge (203) of the magnetic sensor system are or is arranged and which defines a measurement surface, and wherein the optical sensor system has a higher resolution than the magnetic sensor system, and
- a computing unit (105) which is provided to obtain the first sensor output signal (401) and the second sensor output signal (402) and to generate a common sensor output signal from the first sensor output signal (401) and the second sensor output signal (402), wherein the current period of the optical sensor system can be deduced from the second sensor output signal (402) of the magnetic sensor system at any time, in order to calculate clear absolute position information based on the first and the second sensor output signal, wherein the accuracy of the magnetic sensor system is less than the signal period of the optical sensor system.

2. The sensor device according to claim 1, **characterized in that** the gauge (220) of the optical sensor system is arranged in the plane of the common measurement surface (309) of the gauge body (210).

3. The sensor device according to claim 1 or 2, **characterized in that** the gauge (203) of the magnetic sensor system is arranged in a direction facing away from the measuring unit (102) of the optical sensor system and the measuring unit (101) of the magnetic sensor system and spaced from the common measurement surface (309) of the gauge body (210).

4. The sensor device according to anyone of the preceding claims, **characterized in that** the sensor output signals (402) from the magnetic sensor system are in another digital data format than the sensor output signals (401) from the optical sensor system.

5. The sensor device according to anyone of the preceding claims, **characterized in that** the geometric dimension of the gauge (220) of the optical sensor system in the direction of its largest extension corresponds essentially to the geometric dimension of the gauge (203) of the magnetic sensor system in the direction of its largest extension.

6. The sensor device according to anyone of the preceding claims, **characterized in that** the optical sensor system is an incremental sensor system, and the magnetic sensor system is an absolute measuring sensor system.

7. The sensor device according to anyone of the preceding claims, **characterized in that** the resolution of the sensor unit is identical to the resolution of the optical sensor system.

8. The sensor device according to anyone of the preceding claims, **characterized in that** the gauge (220) of the optical sensor system has a lattice structure with between 3 and 20 lines per mm.

9. The sensor device according to claim 8, **characterized in that** the lattice structure is manufactured by means of etching or by laser.

10. The sensor device according to anyone of the preceding claims, **characterized in that** the thermal expansion coefficient of the material for the gauge (220) of the optical sensor system essentially corresponds to the thermal expansion coefficient of the material for the gauge (203) of the magnetic sensor system.

11. The sensor device according to anyone of the preceding claims, **characterized in that** the total resolution thereof in a linear position measurement is better than 100 nm and in a rotation position measurement better than 100 µrad.

12. The sensor device according to anyone of the preceding claims, **characterized in that** the measuring unit (102) of the optical sensor system and/or the measuring unit (101) of the magnetic sensor system are/is realized as an integrated circuit.

13. The sensor device according to anyone of the preceding claims, **characterized in that** the measurement data items of the sensor unit are transmitted to a higher-order unit in a secured digital data format.

14. A method for detecting measurement data relating to the absolute position of a linearly or rotationally moveable body using a sensor device defined according to any one of claims 1 to 13, wherein the sensor output signals (401, 402) of both of the sensor systems are compared with each other in the computing unit (105) in order to achieve increased redundancy and to generate a warning in the event of a fault.

15. The method according to claim 14, **characterized in that** the sensor device synchronously reads in the sensor output signals (401, 402) from both of the sensor systems and calculates therefrom position measurement data of higher resolution, which are kept ready for a subsequent unit reading out the position measurement data, wherein the retrieval of the position measurement data of higher resolution by the unit reading out is performed asynchronously to the calculation thereof.

16. The method according to claim 15, **characterized in that** the position measurement data is first requested by the unit reading out, and subsequently the computing unit (102) of both of the sensor systems requests synchronously the respective position measurement data and calculates new position information from both of the position measurement data, and the new position information is then sent back to the unit reading out.

## Revendications

1. Dispositif capteur pour l'acquisition de données de mesure concernant la position absolue d'un corps mobile linéairement ou en rotation, comprenant :
- un système capteur optique présentant une unité de mesure (102) et une graduation (220) coopérant avec l'unité de mesure (102), le système capteur optique utilisant pour la mesure de la position exclusivement des réflexions d'ordre zéro, et le système capteur optique émet un premier signal de sortie de capteur en fonction de la position à déterminer du corps mobile, et
- un système capteur magnétique présentant une unité de mesure (101) et une graduation (203) coopérant avec l'unité de mesure, qui émet un deuxième signal de sortie de capteur dépendant de la position à déterminer du corps mobile, la graduation (220) du système capteur optique et la graduation (203) du système capteur magnétique étant intégrées dans un corps porte-graduation (210) commun, et l'unité de mesure (102) du système capteur optique et l'unité de mesure (101) du système capteur magnétique étant tournées vers la surface du corps porte-graduation (210), sur laquelle est disposée la graduation (220) du système capteur optique et/ou la graduation (203) du système capteur magnétique et qui définit une surface de mesure, et le système capteur optique présentant une résolution plus élevée que le système capteur magnétique, et
- une unité de calcul (105) qui est prévue pour calculer le premier signal de sortie de capteur (401) et le second signal de sortie de capteur (402) et pour générer un signal de sortie de capteur commun à partir du premier signal de sortie de capteur (401) et du second signal de sortie de capteur (402), le second signal de sortie de capteur (402) du système capteur magnétique permettant de conclure à tout moment à la période actuelle du système capteur optique, afin de calculer une information de position absolue univoque basée sur le premier et le second signal de sortie de capteur,
la précision du système capteur magnétique étant inférieure à la période du signal du système capteur optique.

2. Dispositif capteur selon la revendication 1,
**caractérisé en ce que** la graduation (220) du système capteur optique est disposée dans le plan de la surface de mesure commune (309) du corps porte-graduation (210).

3. Dispositif capteur selon la revendication 1 ou 2,
**caractérisé en ce que** la graduation (203) du système capteur magnétique est disposée à distance de la surface de mesure commune (309) du corps porte-graduation (210) dans une direction détournée de l'unité de mesure (102) du système capteur optique et dans une direction détournée de l'unité de mesure (101) du système capteur magnétique.

4. Dispositif capteur selon l'une des revendications précédentes, **caractérisé en ce que** les signaux de sortie de capteur (402) du système capteur magnétique se présentent dans un format de données numériques différent de celui des signaux de sortie de capteur (401) du système capteur optique.

5. Dispositif capteur selon l'une des revendications précédentes, **caractérisé en ce que** la dimension géométrique de la graduation (220) du système capteur optique dans la direction de sa plus grande extension correspond sensiblement à la dimension géométrique de la graduation (203) du système capteur magnétique dans la direction de sa plus grande extension.

6. Dispositif capteur selon l'une des revendications précédentes, **caractérisé en ce que** le système capteur optique est un système capteur incrémental et le système capteur magnétique est un système capteur de mesure absolue.

7. Dispositif capteur selon l'une des revendications précédentes, **caractérisé en ce que** la résolution de l'unité de capteur est identique à la résolution du système capteur optique.

8. Dispositif capteur selon l'une des revendications précédentes, **caractérisé en ce que** la graduation (220) du système capteur optique présente une structure de grille avec entre 3 et 20 lignes par mm.

9. Dispositif capteur selon la revendication 8,
**caractérisé en ce que** la structure de grille est réalisée par gravure ou par un laser.

10. Dispositif capteur selon l'une des revendications précédentes, **caractérisé en ce que** le coefficient de dilatation thermique du matériau pour la graduation (220) du système capteur optique correspond sensiblement au coefficient de dilatation thermique du matériau pour la graduation (203) du système capteur magnétique.

11. Dispositif capteur selon l'une des revendications précédentes, **caractérisé en ce que** sa résolution globale est meilleure que 100 nm dans une mesure de position linéaire et meilleure que 100 µrad dans une mesure de position rotative.

12. Dispositif capteur selon l'une des revendications précédentes, **caractérisé en ce que** l'unité de mesure (102) du système capteur optique et/ou l'unité de mesure (101) du système capteur magnétique est ou sont réalisée(s) sous forme de circuit intégré.

13. Dispositif capteur selon l'une des revendications précédentes, **caractérisé en ce que** les données de mesure du dispositif capteur sont transmises à une unité maître dans un format de données numériques sécurisé.

14. Procédé d'acquisition des données de mesure relatives à la position absolue d'un corps mobile linéairement ou en rotation en utilisant un dispositif capteur selon l'une des revendications 1 à 13,
dans lequel les signaux de sortie de capteur (401, 402) des deux systèmes capteurs sont comparés entre eux dans l'unité de calcul (105) pour obtenir une redondance accrue et pour générer un avertissement en cas d'erreur.

15. Procédé selon la revendication 14,
**caractérisé en ce que** le dispositif capteur lit de manière synchrone les signaux de sortie de capteur (401, 402) des deux systèmes capteurs et calcule à partir de ceux-ci des données de mesure de position à plus haute résolution, qui sont tenues prêtes pour une unité suivante lisant les données de mesure de position, l'interrogation des données de mesure de position à plus haute résolution par l'unité de lecture étant effectuée de manière asynchrone par rapport au calcul de celles-ci.

16. Procédé selon la revendication 15,
**caractérisé en ce que** les données de mesure de position sont d'abord demandées par l'unité de lecture, puis l'unité de calcul (105) demande les données de mesure de position respectives de façon synchrone depuis les deux systèmes capteurs et calcule une nouvelle information de position à partir des deux données de mesure de position, et la nouvelle information de position est ensuite renvoyée à l'unité de lecture.
